# EUROPEAN PATENT SPECIFICATION

(11) **EP 1 508 686 B1**
(45) Date of publication and mention of the grant of the patent: **09.04.2008**
(21) Application number: 03102587.7
(22) Date of filing: 18.08.2003
(51) Int. Cl.: F02M 25/08

(54) **Evaporated fuel processing device**
Vorrichtung zur Behandlung von verdampftem Brennstoff
Dispositif de traitement de carburant évaporé

(43) Date of publication of application: 23.02.2005
(73) Proprietor: Delphi Technologies, Inc., Troy, MI 48007 (US)
(72) Inventor: Hillard, Christian, 57525, TALANGE (FR); Loevenbruck, Remi, 6791, ATHUS (BE); Hislaire, Ives, 6630, MARTELANGE (BE)
(74) Representative: Beissel, Jean

(56) References cited:
- EP-A- 0 517 257
- EP-A- 0 556 488
- US-A- 4 306 894

## Description

### Field of the invention

The present invention generally relates to an evaporated fuel processing device, in particular for an internal combustion engine of an automotive vehicle, comprising an evaporative canister.

### Background of the invention

There are three main sources of polluting gases from an internal combustion engine: engine exhaust, crankcase and fuel supply systems. In the fuel tank, the hydrocarbons that are continually evaporating from the fuel constitute a significant contributing factor to air pollution.

To control the air pollution resulting from these emissions, governments establish quality standards and perform inspections to ensure that standards are met. Standards have become progressively more stringent, and the equipment necessary to meet them has become more complex. Emissions from the fuel tank are reduced by an evaporated fuel processing device, a part of which is an evaporative canister of activated carbon capable of holding fuel vapor entering the canister via a tank port. The evaporative canister acts as a storehouse. When the engine is running, the adsorbent is regenerated by purging the vapors from the evaporative canister through the purge port into the combustion chamber, where they are burnt. During this regeneration, fresh air enters the canister through an atmospheric port, usually situated on the opposite side of tank and purge ports.

To prevent fuel vapors from passing to easily around loose adsorbent particles, it is desirable to provide and to keep the adsorbent in a relatively packed or compact state. Thermal volume variations are also of great concern, as these canisters may be used in a very large range of temperatures, e.g. from -40 °C to +120 °C. Therefore, canisters generally also comprise volume compensators including e.g. a compacting plate and springs to keep a sufficient pressure on the adsorbent. EP0.517.257 describes such a canister.

A generally known problem with evaporative canisters is that at the beginning of the purge operation, the pressure drop between tank port and the purge port is lower then between purge port and atmospheric port. Fuel vapors coming directly from the tank are drawn to the engine and may cause the engine to temporary run in an undesirably rich condition, thereby disturbing the engine regulation. This phenomenon is generally referred to as cross-talk. As the vacuum in the tank increases and reaches a certain level, fresh air is suck from the atmospheric port.

One major approach to solve this problem is to forcibly pass the fuel vapors from the tank through the adsorbent to prevent the vapors from being bypassed directly to the purge port. In other words, the aim is to suppress any shortcut between ports and to lengthen the path of incoming fuel vapors within the adsorbent. This can be achieved either by using baffle inserts or partition walls, or by using a so-called buffer tube, which is connected to the purge or tank port and penetrates within the adsorbent material.

A general shortcoming of partitioned canisters is the fact that the whole adsorbent is not uniformly and effectively utilized for storing fuel vapors. Due to the layout of these canisters and physical limitations, such as the relatively slow diffusion of gases, some portions of the adsorbent are either badly desorbed during purge, or poorly charged with evaporated hydrocarbons, both phenomena reducing the overall efficiency of the device.

Buffer tubes may be pressed into the adsorbent material and may have a plurality of through-holes to increase their efficiency. During the insertion step, care must be taken not to damage the buffer tube and not to plug or block the holes. The use of buffer tubes allows a better utilization of the adsorbent, but it generally assumes that the volume compensation has to be done by the side opposite to that of the buffer tube. This configuration therefore significantly reduces the freedom in terms of possible canister shapes and hence of its integration into the engine compartment of a car.

If volume compensation is nevertheless done by the buffer tube side, also called top volume compensation, the buffer tube is inserted in the adsorbent through an opening or aperture provided in the volume compensator. During use, the volume compensator slides along the buffer tube due to compensate for volume variations. However, adsorbent particles tend to agglomerate in the clearance between buffer tube and compensator and may thus prevent the volume compensator from operating properly by reducing its effective path or simply by chocking it, which eventually leads to the malfunction of the whole device.

### Object of the invention

The object of the present invention is hence to provide an improved evaporated fuel processing device which effectively reduces cross-talk and which allows for top volume compensation without being subject to the above mentioned shortcomings.

This object is achieved by an evaporated fuel processing device as claimed in claim 1.

### Summary of the invention

The present invention proposes an evaporated fuel processing device comprising a canister including a canister case defining an adsorbent chamber, which accommodates an adsorbent material to temporarily collect fuel vapors, volume compensator means to keep said adsorbent material in a compact state, a tank port for connecting to a fuel tank, a purge port for connecting to an intake passage of a fuel consuming device, and at least one buffer tube connected to either tank or purge port so as to forcibly pass fuel vapors through the adsorbent material, said buffer tube, in use, extending through an aperture in said volume compensator means into said adsorbent material. According to the invention, the volume compensator means comprises a tubular element associated with each buffer tube comprising a first opening for slidably receiving said buffer tube into said tubular element so that the pressure drop through the clearance between buffer tube and tubular element is higher than the pressure drop through said adsorbent material, and a second opening for the passage of said fuel vapors. In use, the one or more tubular elements are inserted in said adsorbent material in such a way that the first opening is accessible for receiving said associated buffer tube and the second opening is located inside the bulk of the adsorbent material.

A device according to the invention thus not only efficiently reduces cross-talk, but the major advantage of such a canister is that the buffer tube is not in direct contact with the adsorbent. The buffer tube will be received inside an associated tubular element with a larger cross section, which has been inserted into the adsorbent. This tubular element acts as a protection or sheathing for the buffer tube and efficiently eliminates the risk of chocking of the buffer tube in the compensator opening due to adsorbent agglomeration.

In general, volume compensator means and tubular elements are fixed together and, although volume compensator means and tubular element may be separately manufactured parts which are fit together during assembly of the device, it is particularly desirable that the volume compensator means and the one or more tubular elements are formed in one piece. Manufacturing and assembly costs of such a part will essentially be comparable to those of similar volume compensators without tubular element.

Even by increasing the number of buffer tubes and associated tubular elements, e.g. three or more, additional manufacturing costs will remain negligible compared to the general benefit in terms of a more efficient use of the adsorbent and a greater freedom in canister shapes.

As the volume compensator means are commonly located in the path of the fuel vapors, they must be permeable to gases but yet retain adsorbent particles within the adsorbent chamber. This may be achieved by using volume compensator means with perforated plates, screens or grids. To the same purpose, additional filter means may also be applied e.g. to the adsorbent side of the volume compensator. Such filter means can be chosen independently from a large group of filters, such as filters of paper and synthetic materials, foams, meshes and combinations thereof.

In one aspect of the invention, the cross section of these filter means is chosen to be slightly larger than the cross section of the compensator. The filter may thus efficiently prevent adsorbent particles from passing through the clearance between the canister case and the compensator, thereby eliminating the risk of blocking the compensator. A second positive effect of this embodiment is that it also allows for larger tolerances during manufacturing of the compensator, without compromising the function of the device. In a particularly preferred arrangement, a foam layer is applied to the adsorbent side of the compacting plate or grid of the compensator in such a way that the edges of the foam layer project beyond the outer circumference of the compensator and are in sealing contact with the inside of the canister case.

The overall shape of a tubular element of the invention is not critical and will depend on the chosen shape of the slidably received buffer tube and on the fact that it has to be inserted into the adsorbent material. Hence, a tubular element usually has an elongated, e.g. roughly cylindrical, body and preferably has a tapered tip portion to facilitate its insertion into the adsorbent material.

As pointed out, a tubular element of the invention comprises a first and a second opening. The configuration of the first opening largely depends on the shape and the size of the buffer tube. Nevertheless, to facilitate the introduction of the buffer tube, the cross section of the tubular element should be moderately to significantly larger than the overall cross section of the buffer tube. Thus, a further preferred tubular element preferably has a tapered base portion whose larger cross section represents the first opening of the tubular element, whereas the smaller cross section is essentially that of the tubular element body.

The second opening provided in the tubular element may comprise a single orifice or a plurality of orifices, e.g. a plurality of through-holes or slits, the size of which will be chosen to prevent adsorbent particles to penetrate inside the tubular element or the orifices will be protected by means of filters, meshes, etc. Such orifices may be provided anywhere on the tubular element, e.g. only on the tip portion, only on the body portion or on both, to reduce the pressure drop through the tubular element and to enhance the overall purge efficiency of the device.

As mentioned above, the clearance between buffer tube and tubular element must be chosen so that the pressure drop through this clearance is higher than the pressure drop through the adsorbent material to avoid cross-talk. This can be achieved either directly by a sufficiently close fit of said buffer tube inside the tubular element or, preferably, by additional sealing means. Additional sealing means allow for larger manufacturing tolerances, for an easier insertion of the buffer tube and for an improved reliability of the slidable assembly.

These sealing means may be inserted as a separated part anywhere in the clearance between buffer tube and tubular element or they may directly be provided on the inside of the tubular element or the outside of the buffer tube. For manufacturing reasons, the sealing means will preferably be located on the outer circumference of the buffer tube, especially in one piece therewith.

In a particularly preferred embodiment, the sealing means are provided on the outer circumference at the end or rim of the buffer tube, distal to the tank or purge port. This configuration is not only preferable for manufacturing reasons, but also because it allows for a maximum sliding or compensation path of the buffer tube inside the tubular element.

These sealing means may be made of any sufficiently flexible material, preferably of the same material than the buffer tube to reduce manufacturing costs. Its shape is also not critical as long as it permits the sliding of the buffer tube inside the tubular element in the large range of operating conditions to which it will be exposed in a fuel vapor canister. Its cross section may be round, semi-circular, triangular or even irregular, an elongated, roughly triangular cross section being especially advantageous.

Therefore, in a particularly preferred embodiment, the sealing means comprise a flexible skirt. This skirt is preferably in one piece with the buffer tube and outwardly extends from the body of this buffer tube, advantageously on its rim. The angle formed by the skirt and the flow direction of the fuel vapors in the above-mentioned clearance may be chosen depending on given priorities and target results.

In a particularly preferred aspect, the flexible skirt is forming an acute angle with respect to the flow direction of the fuel vapors in the above-mentioned clearance or, in other words, the orientation of the skirt is roughly opposed to that of the flow direction. The benefit of this arrangement is a better sealing efficiency in use due to a constructive self-shutting effect. Actually, the outer edge of the skirt will be pressed against the inner wall of the tubular element when the pressure drops in the purge port side of the canister, i.e. during purge operation of the adsorbent, thereby further reducing the clearance left for the fuel vapors and hence increasing the pressure drop therethrough.

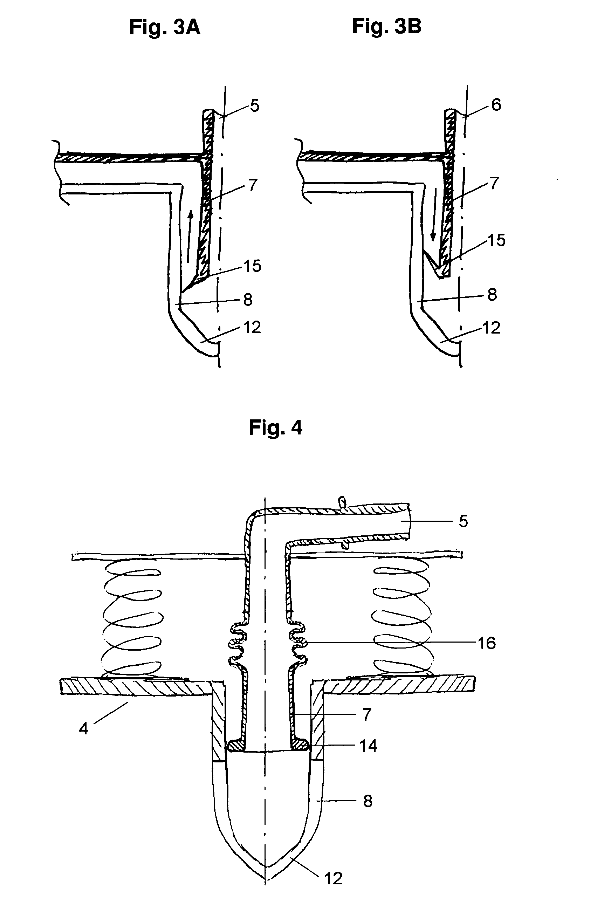

As the flow direction inside the clearance depends on the basic tank or purge port configuration of the canister, i.e. on the fact that the buffer tubes are either connected to the tank port (Fig. 3A) or to the purge port (Fig. 3B), the physical orientation of the skirt also depends on this configuration.

Independently of the optimum sealing efficiency, it might be interesting to choose the angle only to ease up insertion of the buffer tube inside the tubular element. In such a case, one can choose an acute angle of the skirt with respect to the body of the buffer tube independently of the flow direction inside the clearance. The skirt thus extends from the rim backwards thereby facilitating its insertion due to a centering effect of the tip formed by the skirt.

As the buffer tube does not need to be pressed into the adsorbent material, it may be rather flexible as compared to known buffer tubes. This flexibility reduces the chocking risk of the buffer tube inside the tubular element in the case where the volume compensator's path is not exactly axial to the buffer tube. However, an exceeding flexibility may also be detrimental to an easy insertion and the dimensional stability of the buffer tube. For that reason, in another preferred embodiment of the invention, the buffer tube has a flexible axial portion, e.g. a portion with a reduced wall thickness, a portion made of a more flexible material or preferably a bellows type portion. The location of such a flexible portion will usually be on the port or top side of the buffer tube to get optimum results.

As mentioned above, a special advantage of a canister of the invention is a top volume compensation, wherein the volume compensator will usually be placed into the canister case through the top. Hence, in a further embodiment, the buffer tubes, the tank port and the purge port are integrated in a cover portion of the canister case. This cover may be removable to facilitate recycling or refilling of the canister or be sealed or welded during assembly of the device. In the latter case, the cover portion is preferably welded to the canister case by vibration welding.

Especially in the instance where there is more than one buffer tube in communication with the purge or tank port, a device of the invention will preferably further comprise collector means for connecting said at least one buffer tube to said tank or purge port. Although part of the tubular elements might be connected to the tank port and the remaining tubular elements to the purge port through separate collector means, advantageously all of the tubular elements will be connected to the same port.

To simplify the assembly of the canister, it is of particular interest that the collector means are integrated in said cover portion of the canister case, preferably directly in one piece with the buffer tubes.

As stated above, the buffer tubes may be in communication with either tank or purge port. In a particularly advantageous embodiment said at least one buffer tube is connected to said tank port.

The adsorbent material may comprise any material or mixtures of different materials with sufficiently high specific surface area capable of adsorbing volatile hydrocarbons, and optionally other additives or stabilizers. A preferred adsorbent material according to the present invention is activated carbon, which may be used in any convenient form, such as powders, granules or pellets.

The purge port may be connected to the intake passage of a fuel consuming device, usually to the combustion chamber of an internal combustion engine or to a cell of a fuel cell system. Although the present invention also encompasses the use of the evaporated fuel processing device in stationary installations, the main need for such devices is in the automobile industry. Therefore, another aspect of the invention is the use of an evaporated fuel processing device as described above in an automotive vehicle, especially in hybrid or non-hybrid vehicles with an internal combustion engine or in vehicles using a fuel cell system.

### Detailed description with respect to the figures

The present invention will be more apparent from the following description of non-limiting embodiments with reference to the attached drawings, wherein same numerals refer to the same feature.
Fig. 1 is an exploded view an embodiment of the invention.
Fig. 2 is a partial sectional view of an embodiment of an assembled device of the invention.
Fig. 3A and 3B are sectional views of two possible configurations of a further embodiment comprising additional sealing means, wherein the port connected to the buffer tube in Fig3A is the tank port and in Fig. 3B the purge port.
Fig. 4 is a sectional view of a further embodiment of the invention, showing a buffer tube with a flexible axial portion.

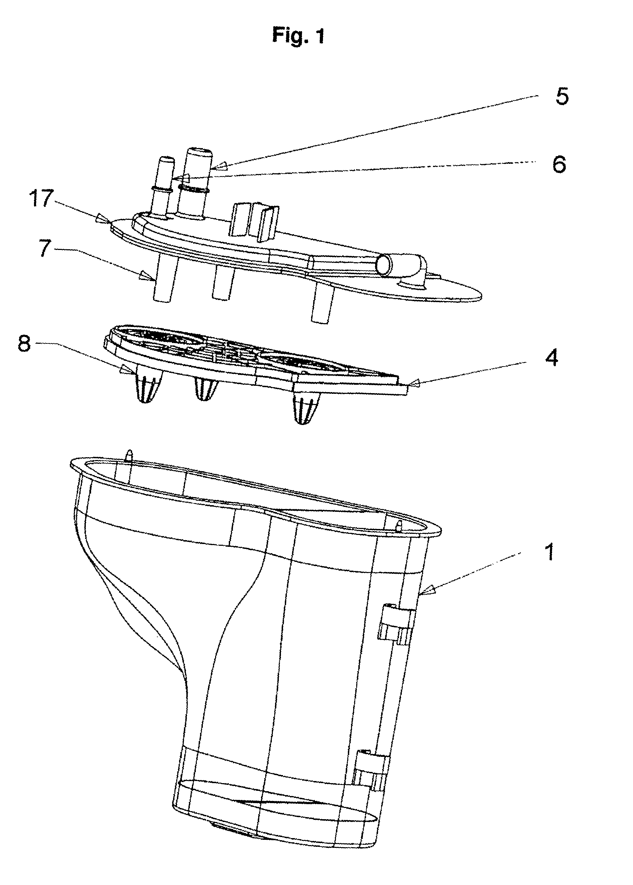

Fig. 1 represents an exploded view showing the canister case (1) defining an adsorbent chamber, which accommodates the adsorbent material, a cover portion (17) comprising a tank port (5), a purge port (6) and one or more buffer tubes (7), and a volume compensator (4) provided with a foam layer and with one or more tubular elements (8), each associated to one buffer tube (7) and springs (not shown).

During its assembly, the canister case (1) is filled with adsorbent material. The volume compensator (4) with its tubular elements (8) is then inserted into the adsorbent. Springs (not shown) are positioned between compensator and cover and the cover (17) is finally placed on top of the canister case (1), thereby slidably receiving each buffer tube (7) in its associated tubular element (8).

In use, the tank port (5) is connected to fuel tank, e.g. of an automobile, and the purge port (6) is connected to the intake passage of a fuel consuming device, e.g. an engine or a fuel cell. Fuel vapors from the tank enter the canister through the tank port.

In a tank port configuration where the buffer tubes are connected to the tank port, the vapors leave the buffer tube, pass through the orifices or slits in the tubular element, through the adsorbent where they are partially stripped off and stored, and finally through the volume compensator before leaving the device through the purge port.

In a purge port configuration, fuel vapors first pass through the compensator and are then stripped off and temporarily stored in the adsorbent, before leaving the device through the orifices or slits of a tubular element, through its associated buffer tube and finally through the purge port.

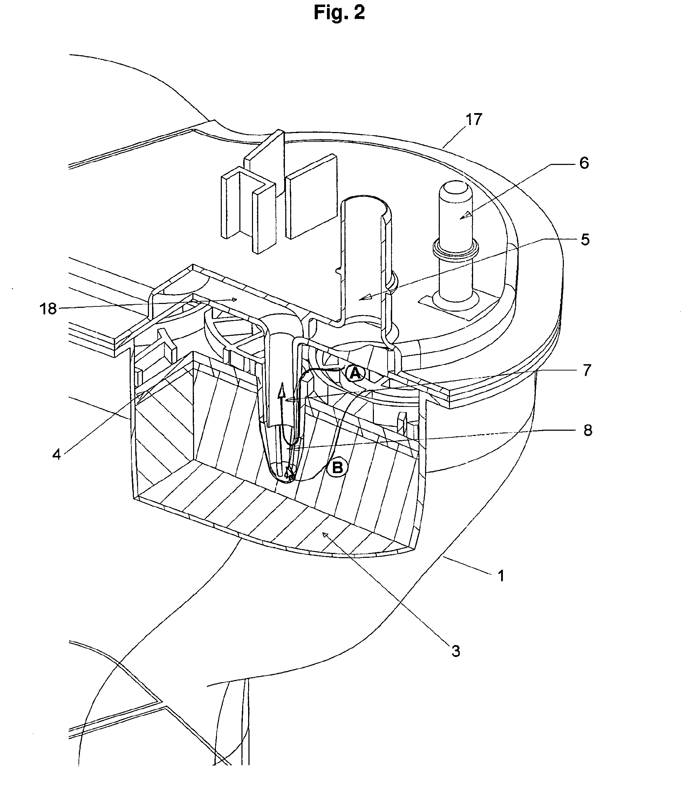

Fig. 2 essentially presents the embodiment of Fig. 1 as a purge port configuration. In such a canister, purge port (6) is connected to the buffer tubes (7), optionally through a collector (18) provided in the cover portion (17). The tubular elements (8) of the volume compensator (4) are inserted into the adsorbent (3) and slidably receive the buffer tubes (7).

To prevent cross-talk, the pressure drop through the clearance (path A) must be higher than the pressure drop through the adsorbent (path B). This can be achieved with a sufficiently close fit of the buffer tube within the tubular element as shown in Fig. 2 or with additional sealing means (not shown).

Fig. 3A and 3B represent two configurations of a particularly preferred embodiment of the invention comprising sealing means in the shape of a skirt (15), wherein the angle formed by the skirt with respect to the flow direction of the fuel vapors (indicated by an arrow) in the clearance between buffer tube (7) and tubular element (8) is an acute angle. The physical orientation of the skirt depends on the effective flow direction, which is determined by the nature of the port connected to the buffer tube, i.e. the tank port (5) in Fig. 3A or the purge port (6) in Fig. 3B. During purge operation, the outer edge of the skirt is pressed against the inner wall of the tubular element, thereby further increasing the pressure drop through the clearance.

Fig. 4 represents a further embodiment of the invention, wherein the buffer tube (7), connected to the tank port (5) or to the purge port (6, not shown), has a flexible axial portion (16) to prevent chocking of the buffer tube inside the tubular element (8) due to a non axial movement of the volume compensator (4) with respect to the buffer tube (7). The sealing means (14) in Fig. 4 have the form of rounded sealing lip arranged on the rim of the buffer tube.

## Claims

1. Evaporated fuel processing device comprising a canister including:
• a canister case (1) defining an adsorbent chamber, which accommodates an adsorbent material to temporarily collect fuel vapors,
• volume compensator means (4) to keep said adsorbent material in a compact state,
• a tank port (5) for connecting to a fuel tank,
• a purge port (6) for connecting to an intake passage of a fuel consuming device,
• at least one buffer tube (7) connected to either tank (5) or purge port (6) so as to forcibly pass fuel vapors through the adsorbent material, said buffer tube (7), in use, extending through an aperture in said volume compensator means into said adsorbent material,
**characterized in that**
said volume compensator means (4) comprises a tubular element (8) associated with each buffer tube (7) comprising a first opening for slidably receiving said buffer tube (7) into said tubular element (8) so that the pressure drop through the clearance between buffer tube (7) and tubular element (8) is higher than the pressure drop through said adsorbent material, and a second opening for the passage of said fuel vapors,
wherein, in use, said tubular elements (8) are inserted in said adsorbent material in such a way that the first opening is accessible for receiving said associated buffer tube (7) and the second opening is located inside said adsorbent material.

2. Evaporated fuel processing device according to claim 1, wherein said volume compensator means (4) and said at least one tubular element (8) are formed in one piece.

3. Evaporated fuel processing device according to any of the preceding claims, wherein said tubular element (8) has a tapered tip portion to facilitate its insertion into the adsorbent material.

4. Evaporated fuel processing device according to any of the preceding claims, wherein said second opening in said tubular element (8) is formed by a plurality of through-holes or slits.

5. Evaporated fuel processing device according to any of the preceding claims, further comprising sealing means (14) between said buffer tube (7) and tubular element (8) so that the pressure drop through the clearance between buffer tube (7) and tubular element (8) is higher than the pressure drop through said adsorbent material.

6. Evaporated fuel processing device according to claim 5, wherein said sealing means (14) are arranged on the outer circumference of said buffer tube (7).

7. Evaporated fuel processing device according to claim 6, wherein said sealing means (14) are provided at the end of said buffer tube (7) distal to said tank (5) or purge port (6).

8. Evaporated fuel processing device according to claims 5 to 7, wherein said sealing means (14) comprise a flexible skirt (15).

9. Evaporated fuel processing device according to claim 8, wherein said flexible skirt (15) is forming an acute angle with respect to the flow direction of the fuel vapors between buffer tube (7) and tubular element (8).

10. Evaporated fuel processing device according to any of the preceding claims, wherein said buffer tube (7) has a flexible axial portion (16).

11. Evaporated fuel processing device according to any of the preceding claims, wherein said at least one buffer tube (7), said tank port (5) and said purge port (6) are integrated in a cover portion of the canister case (1).

12. Evaporated fuel processing device according to any of the preceding claims, further comprising collector means (18) for connecting said at least one buffer tube (7) to said tank (5) or purge port (6).

13. Evaporated fuel processing device according to claim 12, wherein said collector means (18) are integrated in said cover portion (17) of the canister case (1).

14. Evaporated fuel processing device according to claims 12 or 13, wherein said cover portion (17) is welded to the canister case (1) by vibration welding.

15. Evaporated fuel processing device according to any of the preceding claims, wherein said at least one buffer tube (7) is connected to said tank port (5).

16. Evaporated fuel processing device according to any of the preceding claims, wherein said adsorbent material comprises activated carbon.

17. Use of an evaporated fuel processing device according to any of claims 1 to 16 in an automotive vehicle.

## Patentansprüche

1. Verarbeitungsvorrichtung für verdunsteten Kraftstoff, die einen Behälter umfasst, mit:
einem Behältergehäuse (1), das eine Adsorptionsmittelkammer definiert, die ein Adsorptionsmittelmaterial einschließt, um Kraftstoffdämpfe temporär zu sammeln,
einem Volumenkompensatormittel (4), um das Adsorptionsmittelmaterial in einem kompakten Zustand zu halten, einem Tankdurchlass (5) zur Verbindung mit einem Kraftstofftank, einem Spüldurchlass (6) zur Verbindung mit einem Ansaugkanal einer Kraftstoff verbrauchenden Vorrichtung,
zumindest einem Pufferrohr (7), das entweder mit dem Tank (5) oder dem Spüldurchlass (6) verbunden ist, um so Kraftstoffdämpfe durch das Adsorptionsmittelmaterial hindurchzutreiben, wobei sich das Pufferrohr (7) im Gebrauch durch eine Öffnung in dem Volumenkompensatormittel in das Adsorptionsmittelmaterial erstreckt,
**dadurch gekennzeichnet, dass**
das Volumenkompensatormittel (4) ein Rohrelement (8) umfasst, das jedem Pufferrohr (7) zugeordnet ist und eine erste Öffnung zur verschiebbaren Aufnahme des Pufferrohres (7) in das Rohrelement (8), so dass der Druckabfall durch den Zwischenraum zwischen dem Pufferrohr (7) und dem Rohrelement (8) größer als der Druckabfall durch das Adsorptionsmittelmaterial ist, und eine zweite Öffnung für den Durchgang der Kraftstoffdämpfe umfasst,
wobei im Gebrauch die Rohrelemente (8) in das Adsorptionsmittelmaterial derart eingesetzt sind, dass die erste Öffnung zur Aufnahme des zugeordneten Pufferrohres (7) zugänglich ist und die zweite Öffnung innerhalb des Adsorptionsmittelmaterials angeordnet ist.

2. Verarbeitungsvorrichtung für verdunsteten Kraftstoff nach Anspruch 1,
wobei das Volumenkompensatormittel (4) und das zumindest eine Rohrelement (8) einteilig ausgebildet sind.

3. Verarbeitungsvorrichtung für verdunsteten Kraftstoff nach einem der vorhergehenden Ansprüche,
wobei das Rohrelement (8) einen verjüngten Spitzenabschnitt aufweist, um sein Einsetzen in das Adsorptionsmittelmaterial zu erleichtern.

4. Verarbeitungsvorrichtung für verdunsteten Kraftstoff nach einem der vorhergehenden Ansprüche,
wobei die zweite Öffnung in dem Rohrelement (8) durch eine Vielzahl von Durchgangslöchern oder Schlitzen geformt ist.

5. Verarbeitungsvorrichtung für verdunsteten Kraftstoff nach einem der vorhergehenden Ansprüche,
ferner mit einem Dichtungsmittel (14) zwischen dem Pufferrohr (7) und dem Rohrelement (8), so dass der Druckabfall durch den Zwischenraum zwischen dem Pufferrohr (7) und dem Rohrelement (8) größer als der Druckabfall durch das Adsorptionsmittelmaterial ist.

6. Verarbeitungsvorrichtung für verdunsteten Kraftstoff nach Anspruch 5,
wobei das Dichtungsmittel (14) an dem Außenumfang des Pufferrohres (7) angeordnet ist.

7. Verarbeitungsvorrichtung für verdunsteten Kraftstoff nach Anspruch 6,
wobei das Dichtungsmittel (14) an dem Ende des Pufferrohres (7) distal zu dem Tank (5) oder dem Spüldurchlass (6) vorgesehen ist.

8. Verarbeitungsvorrichtung für verdunsteten Kraftstoff nach einem der Ansprüche 5 bis 7,
wobei das Dichtmittel (14) einen flexiblen Rand (15) umfasst.

9. Verarbeitungsvorrichtung für verdunsteten Kraftstoff nach Anspruch 8,
wobei der flexible Rand (15) einen spitzen Winkel in Bezug auf die Strömungsrichtung der Kraftstoffdämpfe zwischen dem Pufferrohr (7) und dem Rohrelement (8) bildet.

10. Verarbeitungsvorrichtung für verdunsteten Kraftstoff nach einem der vorhergehenden Ansprüche,
wobei das Pufferrohr (7) einen flexiblen axialen Abschnitt (16) besitzt.

11. Verarbeitungsvorrichtung für verdunsteten Kraftstoff nach einem der vorhergehenden Ansprüche,
wobei das zumindest eine Pufferrohr (7), der Tankdurchlass (5) und der Spüldurchlass (6) in einen Abdeckabschnitt des Behältergehäuses (1) integriert sind.

12. Verarbeitungsvorrichtung für verdunsteten Kraftstoff nach einem der vorhergehenden Ansprüche,
ferner mit einem Kollektormittel (18) zur Verbindung des zumindest einen Pufferrohres (7) mit dem Tank (5) oder dem Spüldurchlass (6).

13. Verarbeitungsvorrichtung für verdunsteten Kraftstoff nach Anspruch 12,
wobei das Kollektormittel (18) in den Abdeckabschnitt (17) des Behältergehäuses (1) integriert ist.

14. Verarbeitungsvorrichtung für verdunsteten Kraftstoff nach einem der Ansprüche 12 oder 13,
wobei der Abdeckabschnitt (17) durch Vibrationsschweißen mit dem Behältergehäuse (1) verschweißt ist.

15. Verarbeitungsvorrichtung für verdunsteten Kraftstoff nach einem der vorhergehenden Ansprüche,
wobei das zumindest eine Pufferrohr (7) mit dem Tankdurchlass (5) verbunden ist.

16. Verarbeitungsvorrichtung für verdunsteten Kraftstoff nach einem der vorhergehenden Ansprüche,
wobei das Adsorptionsmittelmaterial Aktivkohle umfasst.

17. Verwendung einer Verarbeitungsvorrichtung für verdunsteten Kraftstoff nach einem der Ansprüche 1 bis 16 in einem Kraftfahrzeug.

## Revendications

1. Dispositif de traitement de carburant évaporé incluant un boîtier comprenant :
• une enveloppe de boîtier (1) définissant une chambre d'adsorbant, qui contient un matériau adsorbant destiné à recueillir temporairement des vapeurs de carburant,
• des moyens de compensateur de volume (4) destinés à maintenir le matériau adsorbant à un état compacté,
• un orifice de réservoir (5) destiné à la liaison avec un réservoir de carburant,
• un orifice de purge (6) destiné à la liaison avec un passage d'admission d'un dispositif de combustion de carburant,
• au moins un tuyau tampon (7) relié soit à l'orifice de réservoir (5) soit à l'orifice de purge (6) afin de forcer les vapeurs de carburant à passer à travers le matériau adsorbant, ledit tuyau tampon (7) s'étendant en fonctionnement à travers une ouverture prévue dans lesdits moyens de compensateur de volume jusque dans le matériau adsorbant,
**caractérisé en ce que**
lesdits moyens de compensateur de volume (4) comprennent un élément tubulaire (8) associé à chaque tuyau tampon (7) et comprenant une première ouverture pour recevoir de façon coulissante ledit tuyau tampon (7) dans ledit élément tubulaire (8) de telle façon que la perte de charge dans l'espace libre situé entre le tuyau tampon (7) et l'élément tubulaire (8) soit supérieure à la perte de charge dans ledit matériau adsorbant, et une seconde ouverture pour le passage desdites vapeurs de carburant,
lesdits éléments tubulaires (8) étant, en fonctionnement, insérés dans ledit matériau adsorbant de telle sorte que la première ouverture soit accessible en vue de recevoir ledit tuyau tampon associé (7) et que la seconde ouverture soit située à l'intérieur dudit matériau adsorbant.

2. Dispositif de traitement de carburant évaporé selon la revendication 1, dans lequel lesdits moyens de compensateur de volume (4) et ledit au moins un élément tubulaire (8) sont formés d'une seule pièce.

3. Dispositif de traitement de carburant évaporé selon l'une quelconque des revendications précédentes, dans lequel ledit élément tubulaire (8) a une partie de pointe convergente afin de faciliter son insertion dans le matériau adsorbant.

4. Dispositif de traitement de carburant évaporé selon l'une quelconque des revendications précédentes, dans lequel ladite seconde ouverture prévue dans ledit élément tubulaire (8) est formée d'une pluralité de trous traversants ou de fentes.

5. Dispositif de traitement de carburant évaporé selon l'une quelconque des revendications précédentes, comprenant en outre des moyens d'étanchéité (14) entre ledit tuyau tampon (7) et ledit élément tubulaire (8) de telle façon que la perte de charge dans l'espace libre situé entre le tuyau tampon (7) et l'élément tubulaire (8) soit supérieure à la perte de charge dans ledit matériau adsorbant.

6. Dispositif de traitement de carburant évaporé selon la revendication 5, dans lequel lesdits moyens d'étanchéité (14) sont agencés sur la circonférence externe dudit tuyau tampon (7).

7. Dispositif de traitement de carburant évaporé selon la revendication 6, dans lequel lesdits moyens d'étanchéité (14) sont agencés sur l'extrémité dudit tuyau tampon (7) la plus éloignée dudit orifice de réservoir (5) ou de purge (6).

8. Dispositif de traitement de carburant évaporé selon les revendications 5 à 7, dans lequel les moyens d'étanchéité (14) comprennent une jupe souple (15).

9. Dispositif de traitement de carburant évaporé selon la revendication 8, dans lequel ladite jupe souple (15) forme un angle aigu avec la direction d'écoulement des vapeurs de carburant entre le tuyau tampon (7) et l'élément tubulaire (8).

10. Dispositif de traitement de carburant évaporé selon l'une quelconque des revendications précédentes, dans lequel ledit tuyau tampon (7) a une partie axiale souple (16).

11. Dispositif de traitement de carburant évaporé selon l'une quelconque des revendications précédentes, dans lequel ledit au moins un tuyau tampon (7), ledit orifice de réservoir (5) et ledit orifice de purge (6) sont intégrés dans une partie de couvercle de l'enveloppe de boîtier (1).

12. Dispositif de traitement de carburant évaporé selon l'une quelconque des revendications précédentes, comprenant en outre des moyens de collecteur (18) destinés à relier ledit au moins un tuyau tampon (7) audit orifice de réservoir (5) ou de purge (6).

13. Dispositif de traitement de carburant évaporé selon la revendication 12, dans lequel lesdits moyens de collecteur (18) sont intégrés dans ladite partie de couvercle (17) de l'enveloppe de boîtier (1).

14. Dispositif de traitement de carburant évaporé selon les revendications 12 ou 13, dans lequel ladite partie de couvercle (17) est soudée à l'enveloppe de boîtier (1) par soudage par vibrations.

15. Dispositif de traitement de carburant évaporé selon l'une quelconque des revendications précédentes, dans lequel ledit au moins un tuyau tampon (7) est relié audit orifice de réservoir (5).

16. Dispositif de traitement de carburant évaporé selon l'une quelconque des revendications précédentes, dans lequel ledit matériau adsorbant comprend du charbon actif.

17. Utilisation d'un dispositif de traitement de carburant évaporé selon l'une quelconque des revendications 1 à 16 dans un véhicule automobile.
